# EUROPEAN PATENT APPLICATION

(11) **EP 4 647 548 A1**
(43) Date of publication of application: **12.11.2025**
(21) Application number: 24769812.9
(22) Date of filing: 06.03.2024
(51) Int. Cl.: D06M 11/79, D06M 10/00, D06M 23/00

(54) **AEROGEL HEAT-INSULATING THIN SHEET, AND PREPARATION METHOD THEREFOR AND USE THEREOF**

(30) Priority: 10.03.2023 CN 202310229516
(71) Applicant: Guangdong Alison Technology Co., Ltd., Qingyuan Guangdong 513044 (CN)
(72) Inventor: YUAN, Bing, Qingyuan, Guangdong 513044 (CN); DAN, Liangfeng, Qingyuan, Guangdong 513044 (CN); CHEN, Xiang, Qingyuan, Guangdong 513044 (CN); LIU, Kun, Qingyuan, Guangdong 513044 (CN); ZENG, Yongyang, Qingyuan, Guangdong 513044 (CN)
(74) Representative: Hoffmann Eitle
(86) International application number: PCT/CN2024/080250
(87) International publication number: WO 2024/188119

(57) **Abstract**

The present application belongs to the technical field of functional materials, and discloses an aerogel heat-insulating sheet, a preparation method and use thereof. The aerogel heat-insulating sheet is prepared by: completely immersing a plurality of fiber sheets stacked to a total thickness of 20 mm to 30 mm in a sol, and subjecting the soaked fiber sheets to a gelling treatment at a temperature of 20 °C to 80 °C; stacking a plurality of groups of the gelled fiber sheets separated by grids to a total thickness of 400 mm to 600 mm, where each group has a thickness of 20 nm to 30 nm, fixing the stack in a mold, and placing the mold in a mold barrel containing an ethanol solution and aging at a temperature of 25 °C to 40 °C to obtain wet gel fiber sheets; subjecting the wet gel fiber sheets to supercritical drying to obtain aerogel sheets, and performing post-treatments including gel scraping and dust removal. The thickness of the aerogel heat-insulating sheet is in a range from 0.3 mm to 5 mm, and the aerogel content of the aerogel heat-insulating is in a range from 30% to 40%, thereby reducing the thermal conductivity of the product. The aerogel heat-insulating sheet can be used in a field of new energy power batteries, energy storage batteries, household appliances, or electronic devices.

## Description

### TECHNICAL FIELD

The present application belongs to the technical field of functional materials, and specifically, relates to an aerogel heat-insulating sheet, a preparation method thereof and use thereof.

### BACKGROUND

An aerogel is a heat-insulating material with high porosity, low density, light weight, low thermal conductivity, and excellent thermal insulation and thermal preservation properties, making it a highly promising new material with significant potential in fields such as energy conservation and low-carbon applications, thermal insulation and preservation, cold storage, and adsorption-diffusion. However, aerogels are inherently fragile, forming granules, powder, or blocks, which limits its application in many scenarios. Currently, in most application scenarios, aerogels are typically composited with fiber substrates to form aerogel composites. However, the composites typically have great thicknesses, making them unsuitable for use in confined spaces. Therefore, producing highly effective thin aerogel heat-insulating sheets can substantially address the deficiencies of existing aerogel composites, expand the application fields of the aerogel composite materials, and enhance the portability of the aerogel composite materials.

In the process of manufacturing aerogel heat-insulating sheets by using existing technologies, due to the weak structural strength and thinness of the fiber substrates, the fiber substrates often experience issues such as rupture, incomplete infiltration, and inconsistent gel amount control during the production, making it difficult to produce finished products. Thus, there is a need to develop a new approach in the composite process to prevent rupture of a thin substrate in compositing with an aerogel, ensure a uniform aerogel content within a thin composite material, and achieve consistent quality of the finished products, thereby obtaining heat-insulating sheets with high thermal insulation performance.

### SUMMARY

An objective of the present application is to provide an aerogel heat-insulating sheet to address the deficiencies and shortcomings existing in the prior art mentioned above.

Another objective of the present application is to provide a method for preparing the aerogel heat-insulating sheet.

A yet another objective of the present application is to provide use of the aerogel heat-insulating sheet.

The objectives of the present application are achieved through the following technical solutions:
An aerogel heat-insulating sheet is prepared by: completely immersing a plurality of fiber sheets stacked to a total thickness of 20 mm to 30 mm in a sol, and subjecting the soaked fiber sheets to a gelling treatment at a temperature of 20 °C to 80 °C; stacking a plurality of groups of the gelled fiber sheets separated by grids to a total thickness of 400 mm to 600 mm, where each group has a thickness of 20 nm to 30 nm, fixing the stack in a mold, and placing the mold in a mold barrel containing an ethanol solution and aging at a temperature of 25 °C to 40 °C to obtain wet gel fiber sheets; subjecting the wet gel fiber sheets to supercritical drying to obtain aerogel sheets, and performing post-treatments including gel scraping and dust removal. A thickness of the aerogel heat-insulating sheet is in a range from 0.3 mm to 5 mm.

Preferably, the fiber sheets are glass fiber sheets, ceramic fiber sheets, pre-oxidized fiber sheets, blended fiber sheets, high-silica glass fiber sheets, or any combinations thereof.

Preferably, the sol is one or more selected from a silica sol, an alumina sol, a titanium oxide sol, an iron oxide sol, a magnesium oxide sol, a calcium oxide sol, a polyacrylamide sol, a polyurethane sol, a polyacrylate sol, a polyacrylonitrile sol, a polyimide sol, and an epoxy resin sol.

More preferably, the silica sol is prepared by introducing an organic silicon source or an inorganic silicon source as a sol precursor into ethanol and distilled water, adding NH₄F catalyst, adjusting pH to 7 to 9 with acetic acid or ammonia water, and performing hydrolysis and polycondensation reactions at 20 °C to 80°C.

Preferably, the organic silicon source is methyl silicate or ethyl silicate, the inorganic silicon source is sodium metasilicate, and a mass ratio of the organic silicon source or the inorganic silicon source sodium silicate, ethanol, and distilled water is 1: (1 to 2): (2 to 4).

Preferably, the grids are made of metal, stainless steel, or plastic.

More preferably, the plastic is polyamide, polycarbonate, polyoxymethylene, polyethylene terephthalate, polybutylene terephthalate, or polyphenylene ether.

A method for preparing the aerogel heat-insulating sheet includes the following steps:
S1: completely immersing a plurality of stacked fiber sheets in a sol, and subjecting the soaked fiber sheets to a gelling treatment at a temperature of 20 °C to 80 °C;
S2: stacking a plurality of groups of the gelled fiber sheets separated by grids to a total thickness of 400 mm to 600 mm, where each group has a thickness of 20 nm to 30 nm, fixing the stack in a mold, and placing the mold in a mold barrel containing an ethanol solution and aging at a temperature of 25 °C to 40 °C to obtain wet gel fiber sheets; and
S3: subjecting the wet gel fiber sheets to supercritical drying to obtain aerogel sheets, and performing post-treatments including gel scraping and dust removal to form the aerogel heat-insulating sheet.

Preferably, the aging in step S2 lasts for a time period in a range from 12 hours to 24 hours, and the supercritical drying in step S3 lasts for a time period in a range from 8 hours to 12 hours.

The aerogel heat-insulating sheet is applied in the field of new energy power batteries, energy storage batteries, household appliances, or electronic devices.

The present application adopts the fixture fixing approach to stack fiber sheets into a multi-layer structure, effectively improving the yield of fiber sheets composited with aerogel. After being fixed with the fixture, the multi-layer fiber substrates form an integrated structure, enhancing the overall structural strength and preventing rupture during production. Moreover, the substrates fixed with the fixture are fully immersed in the sol, effectively increasing the sol content in the substrates and avoiding incomplete sol infiltration caused by the thinness of the fiber sheets and the high surface tension of the sol, which would otherwise lead to only surface soaking. Particularly, a thin fiber substrate thinner than 1 mm, which has a low weight and a poor structural strength, is difficult to be completely immersed in a sol solution. Additionally, during the aging and drying, the stacked thin wet gel fiber sheets are separated into groups with reasonably distributed thicknesses by grids. This approach improves production efficiency while ensuring that the aerogel-fiber composite in each group does not have excessive overall thickness or uneven structural force distribution, thereby preventing product rupture during transfer and increasing the yield.

Compared with the prior art, the present application has the following beneficial effects:
1. The present application can reduce the chance of damaging the material (semi-finished or finished product) during transfers between different steps in the production process. The material can be completely immersed in the sol during sol soaking, allowing the fibers to absorb more sol, thereby increasing the aerogel content in the aerogel heat-insulating sheet. The thickness of the aerogel heat-insulating sheet is in a range from 0.3 mm to 5 mm, and the aerogel content in the aerogel heat-insulating sheet is in a range from 30% to 40%, thereby reducing the thermal conductivity of the product.
2. The present application can increase the number of sheets produced in a single batch, thereby improving production efficiency while ensuring that the fiber-aerogel composite in each group does not have excessive overall thickness or uneven structural force distribution, preventing product rupture during transfer and increasing the yield.

### BRIEF DESCRIPTION OF THE DRAWINGS

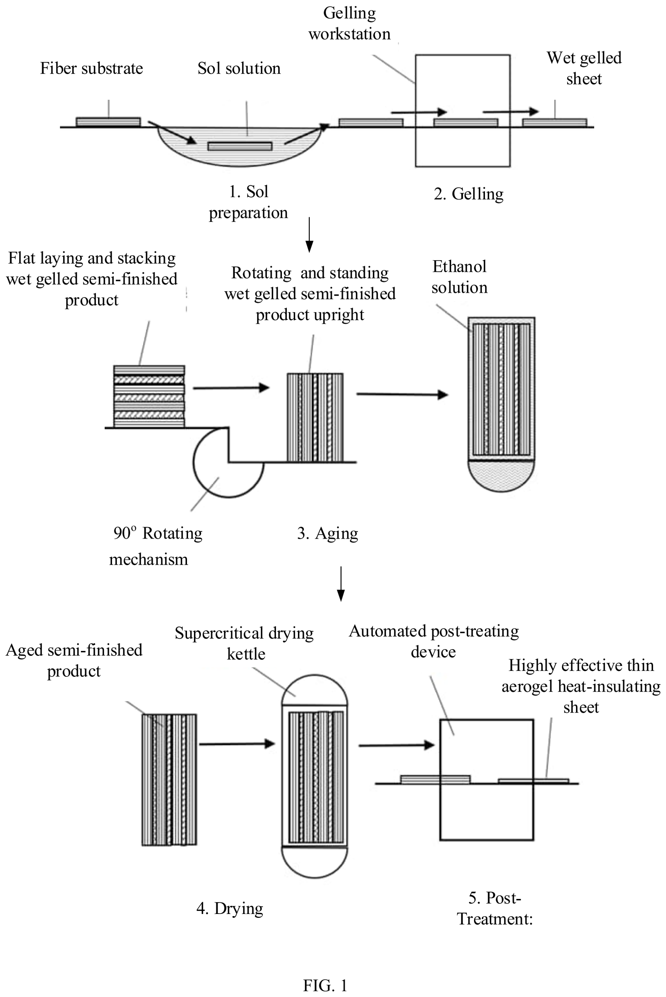

FIG. 1 shows a flowchart of a method for preparing an aerogel heat-insulating sheet according to the present application.
FIG. 2 shows a schematic view of a fixing fixture according to the present application.
FIG. 3 is a schematic view of a separating grid according to the present application.

### DETAILED DESCRIPTION

The present application will be further described below with reference to specific embodiments. However, these specific embodiments should not be construed as limiting the present application. Unless otherwise specified, the technical means used in the embodiments are conventional means well known to those skilled in the art. Unless otherwise stated, the reagents, methods, and devices used in the present application are conventional reagents, methods, and devices in the art.

### Example 1

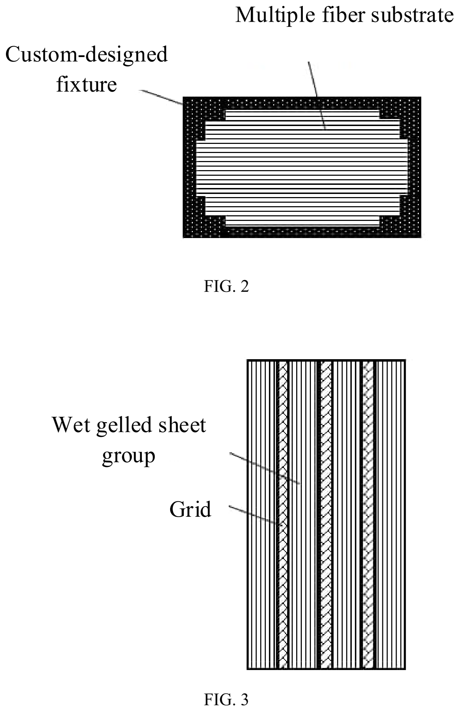

1. Sol preparation: 1 part of methyl silicate (TMOS), ethyl silicate (TEOS), or sodium metasilicate, as a sol precursor, was added to 1-2 parts of ethanol and 2-4 parts of distilled water, and then 0.1 parts of NH₄F was added. The mixture was adjusted to a pH of 7-9 with acetic acid or ammonia water, and subjected to hydrolysis and polycondensation reactions at 20-80 °C to obtain a silica sol.
2. Gelling: A plurality of fiber sheets each with a size of (1000-1500) mm×(500-1000) mm×(0.3-5) mm were stacked to a total thickness of 20-30 mm. The plurality of fiber sheets were fixed with a custom-designed fixing fixture (as shown in FIG. 2) and introduced into a sol-soaking tank to ensure complete immersion in the sol. The soaked fiber sheets were transferred to a gelling workstation (with a length of about 3 m for gelling) at a speed of 0.1-0.5 m/s and gelled at 20-80 °C, allowing the sol soaked in the fibers to be formed into gel, thereby forming gelled fiber sheets.
3. Aging: A plurality of groups of the gelled fiber sheets were stacked and placed into a stainless steel mold, where a thickness of each group of the gelled fiber sheets was in a range from 20 mm to 30 mm, and the groups were separated from each other by grids as shown in FIG. 3. The grids can be metal grids, e.g., stainless steel grids, or engineering plastic grids made of a material such as polyamide (nylon, PA), polycarbonate (PC), polyoxymethylene (POM), polyester (e.g., PET or PBT), or polyphenylene ether (PPO). When the groups were stacked to have a total thickness of about 500 mm, they were fixed through the mold and placed in a mold barrel containing ethanol, and aged at 25-40 °C for 12-24 hours to obtain wet gel sheets.
4. Drying: The aged wet gel sheets were hanged in a drying kettle and subjected to supercritical drying for 8-12 hours to extract the solvent from the wet gel sheets, yielding an aerogel semi-finished product.
5. Post-Treatments: The sheet-shaped aerogel semi-finished product in the mold was separated into individual sheets. With an automated device, the sheets were subjected to surface cleaning including post-treatments such as gel scraping and dust removal, yielding aerogel heat-insulating sheets. Each aerogel heat-insulating sheet has a thickness in a range from 0.3 mm to 5 mm and an aerogel content in a range from 30% to 40%. The heat-insulating sheet can be placed into a confined space and has a thermal conductivity equal to or less than 0.025 W/m·K.

### Example 2

1. Sol preparation: 1 part of TMOS, TEOS, or sodium metasilicate, as a sol precursor, was added to 1-2 parts of ethanol and 2-4 parts of distilled water, and then 0.1 parts of NH₄F was added. The mixture was adjusted to a pH of 7-9 with acetic acid or ammonia water, and subjected to hydrolysis and polycondensation reactions at 20-80 °C to obtain a silica sol.
2. Gelling: Fiber sheets each with a size of (1000-1500) mm×(500-1000) mm×1 mm were introduced into a sol-soaking tank to allow the fiber products to completely be immersed in the sol. The soaked fiber sheets were transferred to a gelling workstation (with a length of about 3 m for gelling) at a speed of 0.1-0.5 m/s and gelled at 20-80 °C, allowing the sol soaked in the fibers to be formed into gel, thereby forming gelled fiber sheets.
3. Aging: A plurality of groups of the gelled fiber sheets were stacked and placed into a stainless steel mold, where a thickness of each group of the gelled fiber sheets was 30 mm, and the groups were separated from each other by stainless steel grids. When the groups were stacked to have a total thickness of about 500 mm, they were fixed through the mold and placed in a mold barrel containing ethanol, and aged at 40 °C for 20 hours to obtain wet gel sheets.
4. Drying: The aged wet gel sheets were hanged in a drying kettle and subjected to supercritical drying for 8-12 hours to extract the solvent from the wet gel sheets, yielding an aerogel semi-finished product.
5. Post-Treatments: The aerogel semi-finished product was transferred into an automated device and subjected to surface cleaning including post-treatments such as gel scraping and dust removal, yielding an aerogel heat-insulating sheet. The aerogel heat-insulating sheet has a thickness of 1 mm and an aerogel content in a range from 30% to 35%. The heat-insulating sheet can be placed into a confined space of 1 mm and has a thermal conductivity equal to or less than 0.025 W/m·K.

### Example 3

1. Sol preparation: 1 part of TMOS or TEOS, as a sol precursor, was added to 1 part of ethanol and 3 parts of distilled water, and then 0.1 parts of NH₄F was added. The mixture was adjusted to a pH of 8 with acetic acid or ammonia water, and subjected to hydrolysis and polycondensation reactions at 60 °C to obtain a silica sol.
2. Gelling: A plurality of glass fiber sheets each with a size of 1000 mm×500 mm×0.5 mm were stacked to a total thickness of 20 mm (about 40 sheets). The plurality of fiber sheets were fixed with a custom-designed fixture and introduced into a sol-soaking tank to allow the fiber product to be completely soaked in the sol. The soaked fiber sheets were transferred to a gelling workstation at a speed of 0.1 m/s and gelled at 80 °C, allowing the sol soaked in the fibers to be formed into gel, thereby forming gelled fiber sheets.
3. Aging: A plurality of groups of the gelled fiber sheets were stacked and placed into a stainless steel mold, where a thickness of each group of the gelled fiber sheets was 30 mm, and the groups were separated from each other by stainless steel grids. When the groups were stacked to have a total thickness of about 500 mm, they were fixed through the mold and placed in a mold barrel containing ethanol, and aged at 40 °C for 20 hours to obtain wet gel sheets.
4. Drying: The aged wet gel sheets were hanged in a drying kettle and subjected to supercritical drying for 12 hours to extract the solvent from the wet gel sheets, yielding an aerogel semi-finished product.
5. Post-Treatments: The aerogel semi-finished product was separated into individual sheets. With an automated device, the sheets were subjected to surface cleaning including post-treatments such as gel scraping and dust removal, yielding aerogel heat-insulating sheets. Each aerogel heat-insulating sheet has a thickness of 0.5 mm and an aerogel content in a range from 35% to 40%. The heat-insulating sheet can be placed into a confined space of 0.5 mm and has a thermal conductivity equal to or less than 0.025 W/m·K.

The above examples are preferred embodiments of the present application, but the embodiments of the present application are not limited to the above examples. Any other changes, modifications, substitutions, combinations, and simplifications made without departing from the spirit and concept of the present application should be considered as equivalent replacement implements and all fall withe protection scope of the present application.

## Claims

1. An aerogel heat-insulating sheet prepared by:
completely immersing a plurality of fiber sheets stacked to a total thickness of 20 mm to 30 mm in a sol, and subjecting the soaked fiber sheets to a gelling treatment at a temperature of 20 °C to 80 °C;
stacking a plurality of groups of the gelled fiber sheets separated by grids to a total thickness of 400 mm to 600 mm, where each group has a thickness of 20 nm to 30 nm, fixing the stack in a mold, and placing the mold in a mold barrel containing an ethanol solution and aging at a temperature of 25 °C to 40 °C to obtain wet gel fiber sheets; and
subjecting the wet gel fiber sheets to supercritical drying, and performing post-treatments comprising gel scraping and dust removal;
wherein a thickness of the aerogel heat-insulating sheet is in a range from 0.3 mm to 5 mm.

2. The aerogel heat-insulating sheet according to claim 1, wherein the fiber sheets are glass fiber sheets, ceramic fiber sheets, pre-oxidized fiber sheets, blended fiber sheets, high-silica glass fiber sheets, or any combinations thereof.

3. The aerogel heat-insulating sheet according to claim 1, wherein the sol is one or more selected from the group consisting of a silica sol, an alumina sol, a titanium oxide sol, an iron oxide sol, a magnesium oxide sol, a calcium oxide sol, a polyacrylamide sol, a polyurethane sol, a polyacrylate sol, a polyacrylonitrile sol, a polyimide sol, and an epoxy resin sol.

4. The aerogel heat-insulating sheet according to claim 3, wherein the silica sol is prepared by introducing an organic silicon source or an inorganic silicon source as a sol precursor into ethanol and distilled water, adding NH₄F catalyst, adjusting pH to 7 to 9 with acetic acid or ammonia water, and performing hydrolysis and polycondensation reactions at 20 °C to 80°C.

5. The aerogel heat-insulating sheet according to claim 4, wherein the organic silicon source is methyl silicate or ethyl silicate, the inorganic silicon source is sodium metasilicate, and a mass ratio of the organic silicon source or the inorganic silicon source sodium silicate, ethanol, and distilled water is 1: (1 to 2): (2 to 4).

6. The aerogel heat-insulating sheet according to claim 1, wherein the grids are made of metal, stainless steel, or plastic.

7. The aerogel heat-insulating sheet according to claim 6, wherein the plastic is polyamide, polycarbonate, polyoxymethylene, polyethylene terephthalate, polybutylene terephthalate, or polyphenylene ether.

8. A method for preparing the aerogel heat-insulating sheet according to any one of claims 1 to 7, comprising following steps:
S1: completely immersing a plurality of fiber sheets in a sol, and subjecting the soaked fiber sheets to a gelling treatment at a temperature of 20 °C to 80 °C;
S2: stacking a plurality of groups of the gelled fiber sheets separated by grids to a total thickness of 400 to 600 mm, where each group has a thickness of 20 nm to 30 nm, fixing the stack in a mold, and placing the mold in a mold barrel containing an ethanol solution and aging at a temperature of 25 °C to 40 °C to obtain wet gel fiber sheets; and
S3: subjecting the wet gel fiber sheets to supercritical drying to obtain aerogel sheets, and performing post-treatments comprising gel scraping and dust removal to form the aerogel heat-insulating sheet.

9. The method according to claim 8, wherein the aging in step S2 lasts for a time period in a range from 12 hours to 24 hours, and the supercritical drying in step S3 lasts for a time period in a range from 8 hours to 12 hours.

10. Use of the aerogel heat-insulating sheet according to any one of claims 1 to 7 in a field of new energy power batteries, energy storage batteries, household appliances, or electronic devices.
